Europäisches Patentamt

(19) European Patent Office (11) Numéro de publication: **0 060 159**

Office européen des brevets **B1**

(12) **FASCICULE DE BREVET EUROPEEN**

(45) Date de publication du fascicule du brevet: **19.06.85** (51) Int. Cl.⁴: **F 02 G 5/04, F 02 B 33/34**

(21) Numéro de dépôt: **82400255.4**

(22) Date de dépôt: **12.02.82**

(54) **Procédé et dispositif pour diminuer la consommation en carburant d'un moteur à combustion interne.**

(30) Priorité: **20.02.81 FR 8103451**

(43) Date de publication de la demande:
**15.09.82 Bulletin 82/37**

(45) Mention de la délivrance du brevet:
**19.06.85 Bulletin 85/25**

(84) Etats contractants désignés:
**AT BE CH DE FR GB IT LI NL SE**

(56) Documents cités:
**FR-A-1 587 670**
**FR-A-2 274 796**
**FR-A-2 293 581**
**FR-A-2 345 598**
**FR-A-2 424 411**
**GB-A- 639 234**
**US-A-3 888 084**

**SOCIETY OF AUTOMOTIVE ENGINEERS,
vol.86, no.8, août 1978, New York (US), "Using
waste heat boosts diesel efficiency", pages 84 à
94**

(73) Titulaire: **BERTIN & CIE
Zone Industrielle Les Gâtines Allée Gabriel
Voisin
F-78370 Plaisir (FR)**

(72) Inventeur: **Sagnes, Pierre
11, rue du Lac La Clairière
F-78120 Rambouillet (FR)**
Inventeur: **Ribault, Jean-Paul
1, rue Jean Mermoz
F-78390 Bois d'Arcy (FR)**
Inventeur: **Galant, Serge
52, Impasse de la Halte
F-78870 Bailly (FR)**

(74) Mandataire: **Ramey, Daniel et al
Cabinet NETTER 40, rue Vignon
F-75009 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

L'invention concerne un procédé et un dispositif pour diminuer la consommation en carburant des moteurs à combustion interne et, en particulier, des moteurs de véhicules automobiles.

On a déjà proposé, dans les Brevets français 2 293 581 et 2 424 411 de récupérer l'énergie thermique perdue ou dissipée par le moteur (chaleur des gaz d'échappement, du liquide de refroidissement du moteur, de l'huile de lubrification) et de la transformer en énergie par exemple mécanique que l'on cède par l'intermédiaire d'une transmission à l'arbre de sortie du moteur (pour augmenter la puissance motrice) et/ou aux moyens d'entraînement des accessoires du moteur (une pompe, un alternateur, etc.). Il est également connu d'utiliser dans ce but un circuit du type à cycle thermodynamique de Rankine dans lequel un fluide de travail est vaporisé dans une chaudière par la chaleur des gaz d'échappement et entraîne une turbine productrice d'énergie, puis est condensé, réchauffé par échange de chaleur avec le liquide de refroidissement du moteur et l'huile de lubrification, et revient à la chaudière pour être à nouveau vaporisé. On augmente ainsi, grâce à la récupération et la transformation de l'énergie thermique dissipée par le moteur, la puissance fournie par le moteur pour une même consommation de carburant, ou bien on diminue la consommation en carburant pour une même puissance fournie par le moteur.

Il est par ailleurs connu d'équiper les moteurs à combustion interne de moyens de suralimentation en air, pour augmenter dans une large mesure leur puissance de sortie. Cette solution technique permet d'utiliser des moteurs de cylindrée plus faible que l'on fait fonctionner plus fréquemment sous charge élevée et que l'on suralimente, en cas de besoin d'un complément de puissance (pour une accélération brusque, un dépassement, etc.). On utilise en général un turbocompresseur dont la turbine est entraînée par les gaz d'échappment du moteur et entraîne le compresseur alimentant le moteur en air comprimé. On obtient ainsi les mêmes performances et une consommation spécifique moyenne plus faible qu'avec un moteur de plus grosse cylindrée, non suralimenté. L'utilisation d'un moteur de cylindrée plus faible se traduit également par une diminution du coût et du poids.

On a également proposé, dans le Brevet français 2 424 411, d'associer ces deux solutions sur un même moteur, notamment en prévoyant un circuit de récupération d'énergie thermique et un turbocompresseur de suralimentation entraîné par les gaz d'échappement, afin de diminuer encore la consommation de carburant de ce moteur, mais on a constaté que le gain procuré par ces deux moyens utilisés ensemble n'était que peu supérieur au gain procuré par l'un ou l'autre de ces moyens utilisé seul. Cela s'explique par le fait que ces deux moyens fonctionnent au détriment l'un de l'autre, chacun d'eux consommant pour son fonctionnement une énergie qui est prélevée sur l'énergie nécessaire au fonctionnement de l'autre moyen.

L'invention a pour but d'apporter une solution efficace et rentable à ce problème et propose à cet effet de combiner un circuit de récupération et de transformation de l'énergie thermique dissipée par le moteur et un dispositif de suralimentation du moteur de façon telle que les gains fournis par chacun de ces moyens quand ils sont utilisés seuls d'ajoitent dans leur intégralité quand ils sont utilisés ensemble, le gain procuré par l'un de ces moyens étant même augmenté quand l'autre moyen est utilisé simultanément.

Le procédé selon l'invention, pour diminuer la consommation en carburant d'un moteur à combustion interne de cylindrée determinée, en particulier de véhicule automobile, consiste à récupérer une partie au moins de l'énergie thermique dissipée par le moteur et à la transformer et à la céder ensuite au moteur et/ou à ses accessoires au moyen d'un circuit à cycle de Rankine, et à suralimenter le moteur en air au moyen d'un compresseur, et est caractérisé en ce que le circuit à cycle de Rankine et le compresseur de suralimentation du moteur sont indépendants l'un de l'autre, le compresseur étant entraîné mécaniquement par le moteur uniquement en cas de besoin pour obtenir une puissance ou des performances maximales correspondant à celles d'un moteur de cylindrée supérieure, le cycle de Rankine ayant un rendement maximum pour les fiables puissances de sortie du moteur, comprises entre 0 et 50% environ de la puissance maximale dudit moteur.

Ainsi, le fonctionnement du compresseur est indépendant de celui du circuit de récupération d'énergie thermique, en ce sens que l'énergie nécessaire à son entraînement est prélevée en cas de besoin sur l'arbre de sortie du moteur et non en un point quelconque du circuit de récupération d'énergie. Les gains que procurent ces deux moyens se cumulent et l'on a même constaté, de façon surprenante, que l'on pouvait s'attendre à ce que le gain procuré par l'un de ces moyens dans leur association soit augmenté, l'utilisation d'un compressure de suralimentation relevant les températures à l'échappement et donc le rendement du circuit de récupération d'énergie thermique.

Avantageusement, si le cycle de Rankine est calculé de façon à avoir un rendement maximal pour les faibles puissances de sortie du moteur, comprises entre 0 et 50% environ de la puissance maximale du moteur, le compresseur est lui-même dimensionné de façon à avoir une efficacité maximale pour les fortes puissances de sortie du moteur, comprises entre 50% environ et 100% de la puissance maximale de ce moteur.

Par efficacité maximale, on entend que le compresseur est capable de fournir, avec une surpression donnée qui varie peu en fonction du régime moteur, tous les débits d'air demandés par le moteur.

L'invention concerne également un dispositif pour l'exécution de ce procédé, comprenant un circuit à cycle de Rankine propre à récupérer au moins une partie de l'énergie thermique dissipée par le moteur et à la transformer en énergie cédée directement à l'arbre de sortie et/ou aux accessoires du moteur, et un compresseur de suralimentation du moteur en air, caractérisé en ce que le compresseur est entraîné par l'arbre de sortie du moteur par l'intermédiaire de moyens débrayables et/ou à rapport variable, et en ce que le circuit à cycle de Rankine a un rendement maximum pour les faibles puissances de sortie du moteur, comprises entre 0 et 50% environ de la puissance maximale dudit moteur.

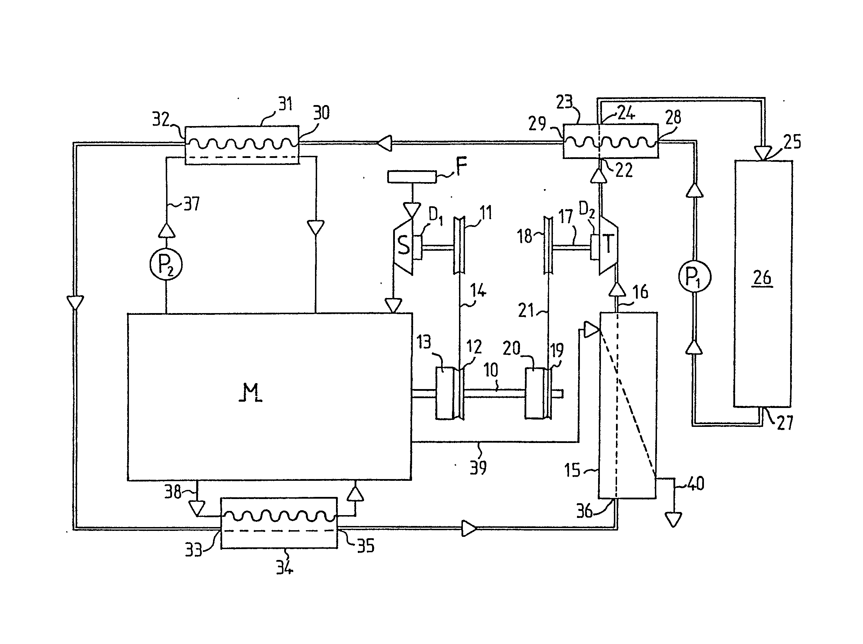

Dans la description qui suit, faite à titre d'exemple, on se réfère au dessin annexé qui est une vue schématique d'un mode de réalisation de l'invention.

Dans ce mode de réalisation, le moteur à combustion interne M est associé à un compresseur, avantageusement un surpresseur volumétrique S entraîné par l'arbre de sortie 10 du moteur M au moyen d'une transmission débrayable et/ou à rapport variable comprenant, par exemple, un démultiplicateur $D_1$ interposé entre le surpresseur et une poulie 11, une poulie 12 propre à être solidarisée avec l'arbre 10 par un embrayage 13, et une courroie 14 passant autour des poulies 11 et 12. Le compresseur peut être un surpresseur volumétrique du type à pistons, á palettes, à vis etc., dont le débit est défini par sa cylindrée et sa vitesse de rotation, ou une turbomachine, par exemple un compresseur périphérique. L'entrée du compresseur ou surpresseur est reliée par exemple à la sortie d'un filtre à air F tandis que sa sortie est reliée au conduit d'admission (non représenté) du moteur.

Le circuit de récupération et de transformation d'énergie thermique à cycle de Rankine, qui est associé au moteur M, comprend une chaudière 15 dont la sortie 16 alimente directement l'entrée d'une machine de détente telle qu'une turbine T. L'arbre de sortie 17 de la turbine T est relié à l'arbre de sortie 10 du moteur M par l'intermédiaire d'une transmission débrayable et/ou à rapport variable comprenant par exemple un démultiplicateur $D_2$ entre l'arbre de sortie 17 et une poulie 18, une poulie 19 solidisable avec l'arbre 10 par l'intermédiaire d'un embrayage 20 et une courroie 21 passant autour des poulies 18 et 19, d'autres moyens adaptés aux puissances et aux vitesses pouvant être utilisés à la place des poulies et courroies.

La sortie de la turbine T est reliée à une entrée 22 d'un premier échangeur de chaleur 23, dont la sortie correspondante 24 est reliée à l'entrée 25 d'un condenseur 26. Une pompe $P_1$ relie la sortie 27 du condenseur 26 à une autre entrée 28 du premier échangeur de chaleur 23, dont la sortie correspondante 29 alimente une entrée 30 d'un deuxième échangeur de chaleur 31. La sortie correspondante 32 de cet échangeur est reliée à l'entrée 33 d'un troisième échangeur de chaleur 34 dont la sortie correspondante 35 est reliée à l'entrée 36 de la chaudière.

Dans le circuit qui vient d'être décrit circule un fluide de travail approprié tel par exemple que du dichlorobenzène, du trifluoroéthanol, de l'hexafluorobenzène, etc. Dans le deuxième échangeur de chaleur 31, ce fluide de travail est réchauffé par le liquide de refroidissement du moteur qu'une pompe $P_2$ fait circuler dans un circuit 37 traversant cet échangeur 31.

Dans le troisième échangeur 34, le fluide de travail est chauffé par le liquide de lubrification du moteur (en général de l'huile) dont le circuit 38 traverse l'échangeur 34 comme indiqué sur le dessin. Le conduit d'échappement 39 du moteur M débouche dans la chaudière 15, qui comprend une sortie 40 permettant d'évacuer les gaz d'échappement vers l'extérieur.

Avantageusement, le circuit à cycle de Rankine est calculé et optimisé de façon à avoir un rendement maximum pour les charges faibles du moteur, par exemple lorsque la puissance fournie par le moteur est comprise entre 0 et 50% environ de la puissance maximale du moteur. Au-delà de cette valeur, le rendement du circuit à cycle de Rankine diminue, la puissance qu'il est susceptible de céder au moteur restant sensiblement constante, ou augmentant légèrement quand le compresseur de suralimentation fonctionne.

Le circuit de récupération d'énergie thermique qui vient l'être décrit fonctionne de la façon suivante:

Le fluide de travail est vaporisé et éventuellement surchauffé dans la chaudière 15, puis envoyé à la turbine qu'il entraîne en rotation. L'énergie mécanique produite par la turbine T est fournie à l'arbre de sortie 10 du moteur par l'intermédiaire de la transmission $D_2$, 18, 19, 21 quand l'embrayage 20 est couplé. Il est intéressant de désaccoupler cet embrayage dans certains cas, par exemple lors d'une décélération du véhicule.

Le fluide de travail sortant de la turbine T est envoyé dans le condenseur 26, d'où il est repris par la pompe $P_1$, préchauffé par traversée des échangeurs de chaleur 23, 31, 34 et renvoyé à la chaudière 15 où le cycle recommence. Le dispositif de suralimentation du moteur par surpression volumétrique de l'air d'admission et le dispositif de récupération de l'énergie thermique dissipée par le moteur fonctionnent indépendamment l'un de l'autre, l'une de ces dispositifs prélevant l'énergie nécessaire à son fonctionnement sur l'arbre de sortie du moteur tandis que l'autre dispositif transmet l'énergie qu'il produit à cet arbre de sortie.

On a constaté que la suralimentation du moteur entraînait une augmentation de la température de combustion et donc une valorisation de l'énergie thermique dissipée par le moteur et récupérée par le dispositif à cycle de Rankine. Il en résulte une augmentation de l'énergie produite par ce dispositif de récupération des pertes calorifiques.

On admet en général que, si un véhicule automobile équipé d'un dispositif selon l'invention est utilisé de façon normale, le compresseur de suralimentation ne fonctionne que pendant 5 à 10% environ de la durée totale de fonctionnement du moteur ou, en d'autres termes, que le moteur fournit une puissance de sortie supérieure à 50% environ de sa puissance maximale pendant 5 à 10% de sa durée de fonctionnement. De façon classique, le fonctionnement du compresseur peut être commandé par l'enfoncement de la pédale d'accélérateur, ou par tout autre moyen approprié.

L'invention prévoit également, dans le cas d'un moteur à allumage commandé, d'associer au dispositif

3

**0 060 159**

de suralimentation un dispositif, connu en soi, permettant d'éviter le phénomène de "cliquetis". Ce phénomène, qui se traduit par un bruit anormal dans les chambres de combustion au moment de l'explosion du mélange combustible, est dû à une auto-inflammation du mélange combustible dans le cas où la suralimentation du moteur dépasse un taux de l'ordre de 30 à 40% en pression. Il est connu actuellement de détecter l'apparition d'un tel phénomène et de le supprimer en agissant automatiquement sur l'avance à l'allumage.

L'association d'un tel dispositif au surpresseur volumétrique permet d'envisager un taux de suralimentation du moteur qui serait au moins égal à 30%, pour toute la gamme de régimes du moteur.

L'invention permet d'obtenir les mêmes performances avec un moteur de plus faible cylindrée, pourvu d'un surpresseur volumétrique de suralimentation et d'un dispositif de récupération de l'énergie thermique à cycle de Rankine, qu'avec un moteur de plus grosse cylindrée non suralimenté et non pourvu d'une récupération d'énergie thermique, tout en diminuant la consommation en carburant de façon sensible.

A titre d'exemple non limitatif, on se reportera au tableau suivant donnant les consommations spécifiques, sur un parcours stabilisé à 90 km/h et sur un cycle européen normalisé ECE, d'un groupe motopropulseur équipant un véhicule de tourisme et comprenant un moteur à allumage commandé et une boîte de vitesses continue dans sa version de base (A) dépourvue de suralimentation et de récupération d'énergie thermique, puis dans une version (B) à récupération d'énergie thermique par un cycle de Rankine, dans une version (C) équipée d'un surpresseur volumétrique et enfin dans une version (D) selon l'invention. La cylindrée du moteur est modifiée d'une version à l'autre pour conserver au véhicule les mêmes performances que celles fournies par la version (A).

| essai <br> version | Vitesse stabilisée à 90 km/h | | Parcours ECE | |
|---|---|---|---|---|
| A | 248 | 337 | 385 | 523 |
| B | 192 | 261 | 298 | 405 |
| C | 225 | 305 | 331 | 450 |
| D | 174 | 236. | 256 | 348 |

La consommation spécifique est exprimée en g/ch.h., resp en g/KWh.

L'invention trouve une application particulièrement intéressante dans le cas des moteurs à combustion interne exploités dans des conditions de charge extrêmement variables, par exemple des moteurs de véhicules de tourisme, de véhicules utilitaires, etc. Elle s'applique également au cas des moteurs fixes, par exemple des moteurs de groupes électrogènes devant s'adapter à la demande de consommation, etc.

Dans tous les cas, ces moteurs peuvent être du type à allumage par compression (cycle Diesel) ou à allumage commandé.

**Revendications**

1. Procédé pour diminuer la consommation en carburant d'un moteur à combustion interne de cylindrée déterminée, en particulier de véhicule automobile, consistant à récupérer une partie au moins de l'énergie thermique dissipée par le moteur et à la transformer et à la céder ensuite au moteur et/ou à ses accessoires au moyen d'un circuit à cycle de Rankine, et à suralimenter le moteur (M) en air au moyen d'un compresseur, caractérisé en ce que le circuit à cycle de Rankine et le compresseur (S) de suralimentation du moteur sont indépendants l'un de l'autre, la compresseur (S) étant entraîné mécaniquement par le moteur (M) uniquement en cas de besoin pour obtenir une puissance ou des performances maximales correspondant à celles d'un moteur de cylindrée supérieure, le cycle de Rankine ayant un rendement maximum pour les faibles puissances de sortie du moteur (M), comprises entre 0 et 50% environ de la puisssance maximale dudit moteur.

2. Procédé selon la revendication 1, caractérisé en ce que le taux de suralimentation du moteur (M) par le compresseur (S) est au moins égal à 30%.

3. Procédé selon l'une des revendications précédentes, caractérisé en ce qu'il consiste à détecter l'apparition du phénomène de "cliquetis" et à régler automatiquement l'avance à l'allumage de façon à supprimer ce phénomène.

4. Procédé selon l'une des revendications précédentes, caractérisé en ce que, lorsque l'énergie récupérée par le cycle de Rankine est fournie sous forme d'énergie mécanique à l'arbre de sortie (10) du moteur (M), il consiste à interrompre momentanément cette fourniture dans certaines conditions, par exemple en cas de décélération du véhicule.

5. Dispositif pour l'exécution du procédé décrit dans l'une des revendications précédentes,

4

**0 060 159**

comprenant un circuit à cycle de Rankine propre à récupérer au moins une partie de l'énergie thermique dissipée par le moteur et à la transformer en énergie cédée directement à l'arbre de sortie et/ou aux accessoires du moteur, et un compresseur (S) de suralimentation du moteur en air, caractérisé en ce que le compresseur (S) est entraîné par l'arbre de sortie (10) du moteur (M) par l'intermédiaire de moyens (11—14) débrayables et/ou à rapport variable, et en ce que le circuit à cycle de Rankine a un rendement maximum pour les faibles puissances de sortie du moteur (M), comprises entre 0 et 50% environ de la puissance maximale dudit moteur.

6. Dispositif selon la revendication 5, caractérisé en ce que le compresseur (S) est un surpresseur volumétrique.

7. Dispositif selon la revendication 5 ou 6, caractérisé en ce que le compresseur (S) est dimensionné pour les fortes puissances de sortie du moteur (M), comprises entre environ 50 et 100% de la puissance maximale dudit moteur.

8. Dispositif selon l'une des revendications 5 à 7, comprenant des moyens de transmission (17—21) entre la sortie du circuit à cycle de Rankine et l'arbre de sortie (10) du moteur (M), caractérisé en ce que ces moyens sont débrayables et/ou à rapport variable.

9. Dispositif selon l'une des revendications 5 à 8, caractérisé en ce qu'il comprend des moyens de détection du phénomène de "cliquetis" dans les chambres de combustion du moteur, et des moyens pour régler l'avance à l'allumage en fonction du signal de sortie desdits moyens de détection, de manière à supprimer le phénomène détecté.

**Patentansprüche**

1. Verfahren zur Verminderung des Brennstoffverbrauchs eines Verbrennungsmotors mit bestimmtem Hubraum, insbesondere eines Automobils, das darin besteht, daß mindestens ein Teil der Warmeenergieverluste zurückgewonnen werden und mit dem kreislauf eines Rankine-Zyklus umgewandelt und danach zum Motor (M) und/oder seinen Zusatzeinrichtungen geführt werden, und der Motor (M) mit einem Kompressor mit Luft vorverdichtet wird, dadurch gekennzeichnet, daß der Kreislauf des Rankine-Zyklus und der Kompressor (S) für die Vorverdichtung des Motors unabhängig voneinander sind, wobei der Kompressor (S) nur dann vom Motor (M) mechanisch angetrieben wird, wenn eine Energie oder die maximale Leistung entsprechend derjenigen eines Motors mit größerem Hubraum erhalten werden soll, wobei der Rankine-Zyklus einen maximalen Wirkungsgrad bei niedrigen Ausgangsleistungen des Motors (M) aufweist, der etwa zwischen 0 und 50% der maximalen Leistung des Motors liegt.

2. Verfahren anch Anspruch 1, dadurch gekennzeichnet, daß der Vorverdichtungsgrad des Motors (M) durch den Kompressor (S) mindestens gleich 30% ist.

3. Verfahren nach einem der vorigen Ansprüche, dadurch gekennzeichnet, daß das Auftreten des "Klingel"-Effekts festgestellt und zur Vermeidung dieses Effekts die Frühzündung automatisch geregelt wird.

4. Verfahren nach einem der vorigen Ansprüche, dadurch gekennzeichnet, daß, wahrend die aus dem Rankine-Zyklus wiedergewonnene Energie an der Ausgangsachse (10) des Motors (M) in Form mechanischer Energie geliefert wird, und diese Verbindung unter bestimmten Bedingungen, z.B. bei einer Fahrtverzögerung des Fahrzeugs, unterbrochen wird.

5. Vorrichtung zur Durchführung des Verfahrens nach einem der vorigen Ansprüche, enthaltend einen Kreislauf eines Rankine-Zyklus, der mindestens einen Teil der Wärmeverluste des Motors zurückgewinnt und in Energie umwandelt, die direkt an die Ausgangswelle und/oder Motorzusatzeinrichtungen abgegeben wird, sowie einen Kompressor (S) zum Vorverdichten des Motors mit Luft, dadurch gekennzeichnet, daß der Kompressor (S) mit der Ausgangswelle (10) des Motors (M) durch auslenkbare Zwischenglieder (11—14) und/oder variable Übersetzungen verbunden ist, und daß der Kreislauf des Rankine-Zyklus bei niedrigen Ausgangsleistungen des Motors (M) einen maximalen Wirkungsgrad hat, der zwischen etwa 0 und 50% der maximalen Leistung des Motors liegt.

6. Vorrichtung nach Anspruch 5, dadurch gekennzeichnet, daß der Kompressor (S) ein volumetrischer Überdruckerzeuger ist.

7. Vorrichtung nach den Ansprüchen 5 oder 6, dadurch gekennzeichnet, daß der Kompressor (S) nach der Höchstausgangsleistung des Motors (M) ausgelegt ist und zwischen etwa 50 und 100% der maximalen Leistung des Motors liegt.

8. Vorrichtung nach einem der Ansprüche 5 bis 7, enthaltend Transmissionsvorrichtungen (17—21) zwischen dem Ausgang des Kreislaufs des Rankine-Zyklus und der Ausgangswelle (10) des Motors (M), dadurch gekennzeichnet, daß diese Vorrichtungen auskuppelbar sind und/oder variable Übersetzungen aufweist.

9. Vorrichtung nach einem der Ansprüche 5 bis 8, dadurch gekennzeichnet, daß sie Vorrichtungen zum Feststellen des "Klingel"-Effekts im Verbrennungsraum des Motors sowie Vorrichtungen zur Regelung der Frühzündung in Abhangigkeit von den Ausgangssignalen der Vorrichtungen zum Feststellen enthält, wodurch der festgestellte Effekt aufgehoben wird.

**Claims**

1. A method of reducing fuel consumption in an internal combustion engine of given cylinder capacity,

5

in particular for a motor vehicle, using a Rankine cycle circuit to recover at least part of the heat energy dissipated by the engine, to transform the recovered energy into mechanical energy, and then to deliver the mechanical energy to the engine and/or to its accessories, and in supercharging the engine (M) with air by means of a compressor, characterized in that the Rankine cycle circuit and the engine supercharging compressor (S) are independent from each other, the compressor (S) being driven mechanically by the engine (M) only whenever it is necessary to obtain maximum performance or power corresponding to those of an engine of greater cylinder capacity; the Rankine cycle having maximum efficiency at low engine output powers lying between about 0% and about 50% of the maximum power from said engine.

2. A method according to claim 1, characterised in that the engine (M) is supercharged by the compressor (S) at least 30%.

3. A method according to any preceding claim, characterised in that the onset of the "pinking" phenomenon is detected, and the ignition is then automatically advanced to prevent said phenomenon.

4. A method according to any preceding claim, characterised in that, when the energy recovered by the Rankine cycle is delivered in the form of mechanical energy to the engine drive shaft (10), it consists in momentarily interrupting this delivery under certain conditions, for example during vehicle deceleration.

5. Apparatus for implementing the method described in any preceding claim, the apparatus comprising a Rankine cycle circuit suitable for recovering at least a part of the heat energy dissipated by the engine and for transforming the recovered energy into energy which is directly delivered to the output shaft and/or to the engine accessories, and a compressor (S) for supercharging the engine with air, caracterized in that the compressor (S) is driven from the engine output shaft (10) via means (11—14) including declutching and/or variable ratio means, and in that the Rankine cycle circuit operates at maximum efficiency at low engine output powers, lying between about 0% to about 50% of the maximum power of said engine.

6. Apparatus according to claim 5, characterised in that the compressor (S) is a positive displacement supercharger.

7. Apparatus according to claim 5 or 6, characterised in that the compressor (S) is designed to match high power output from the engine (M) between about 50% and about 100% of the maximum power of the said engine.

8. Apparatus according to any one of claims 5 to 7, comprising transmission means (17—21) between the output from the Rankine cycle circuit and the engine output shaft (10), characterised in that said means are de-clutchable and/or variable ratio means.

9. Apparatus according to any one of claims 5 to 8, characterized in that it includes means for detecting the "pinking" phenomenon in the engine's combustion chambers, and means for adjusting ignition advance as a function of the output signal from the said detection means to prevent said "pinking".